Europäisches Patentamt

European Patent Office

Office européen des brevets

(11) Publication number: **0 165 075**
**B1**

## EUROPEAN PATENT SPECIFICATION

(45) Date of publication of patent specification: **13.12.89**

(21) Application number: **85304291.9**

(22) Date of filing: **14.06.85**

(51) Int. Cl.⁴: **C 08 J 5/18, B 29 D 7/00 //
(B29K21/00, 23:00)**

(54) Process for manufacturing high clarity film containing elastomers.

(30) Priority: **15.06.84 US 621179
31.01.85 US 696738**

(43) Date of publication of application:
**18.12.85 Bulletin 85/51**

(45) Publication of the grant of the patent:
**13.12.89 Bulletin 89/50**

(84) Designated Contracting States:
**BE DE FR GB IT NL SE**

(56) References cited:
**EP-A-0 097 008
US-A-4 303 571
US-A-4 368 240**

(73) Proprietor: **Exxon Research and Engineering Company
P.O.Box 390 180 Park Avenue
Florham Park New Jersey 07932 (US)**

(72) Inventor: **Hazelton, Donald Ross
89 Glenmore Drive
Chatham New Jersey (US)**
Inventor: **Middlesworth, Jeffrey Alan
458 Lost Rock Drive
Webster Texas (US)**

(74) Representative: **Dew, Melvyn John et al
Esso Chemical Ltd. Esso Chemical Research
Centre P.O. Box 1
Abingdon Oxfordshire, OX13 6BB (GB)**

Courier Press, Leamington Spa, England.

## Description

This invention relates to a process for manufacturing high clarity films composed of elastomer/polyolefin blends. In one aspect it relates to a process for manufacturing films for medical solution bags.

Films for medical solution bags must possess properties of flexibility, clarity, impact resistance, and tear resistance. In addition, they must be capable of maintaining these properties after sterilization. Elastomer/polyolefin blend films are particularly suited for medical solution bags but because of their generally poor optical properties, these films have not been particularly successful in this application. Efforts have been made to improve the optical properties of these films by passing the melt between metal rollers. This process, however, requires special equipment, has severe limitations in processing thin gauge film [less than $200 \times 10^{-6}$ m (200 microns)] uniformly across the film web, and introduces significant machine direction strain which makes the film properties anisotropic. Moreover, the line speeds for the process are slow.

U.S. Patent 4,368,240 (Nauta et al) discloses a process for "polishing" synthetic thermoplastic resins such as polycarbonate, polyesters and polysulfone using a glossy silicone rubber coated roller in combination with a metal chill roll. Significantly, the Nauta et al patent does not involve processing elastomer/polyolefin blends. Nor does it disclose the effects of the process on key physical properties such as clarity, impact resistance, tear resistance, and tensile strength.

EP—A—0097008 is also concerned with polishing film to give improved optical properties. The film materials are said to be thermoplastics comprising at least 70% by weight of high density polyethylene (HDPE), that is substantially linear ethylene homopolymers, ethylene hydrocarbon copolymers, and blends thereof having a density not less than 935 kg m$^{-3}$. In addition to HDPE, the film material may comprise low density polyethylene, linear low density polyethylene, polypropylene, ethylene/vinyl acetate copolymer or ethylene/ethyl acrylate copolymer. The film, according to the process of EP—A—0097008, is treated by subjecting the raw blown film, which may be heated, to a surface pressure between two or more oppositely disposed surfaces at least one of which is a smooth surface, so as to cause plastic deformation of the thermoplastics and levelling of the film surface in contact with the smooth surface. Polished chromium-plated rollers, polished sheet steel and sheets of smooth thermoset plastics are mentioned as suitable smooth surfaces, and the resulting film has a total haze (ASTM D 1003—61/70, procedure A) of less than 50% and a clarity (ASTM D 1746—70) of at least 25%. Film treated by the disclosed process is measured as having a reduced Elmendorf tear strength compared with untreated film.

It has surprisingly been discovered that by passing an extruded molten web of an elastomer/polyolefin blend through the nip of counterrotating rollers, wherein one of the rollers is resilient and has a highly glossy rubber surface, a film of improved optical properties and improved toughness is obtained. The resilient roller preferably has an outer surface of silicone rubber.

Thus according to the present invention there is provided a process for the manufacture of elastomeric film which comprises

(a) extruding a molten blend of 10 to 85 wt.% of an elastomer and 90 to 15 wt.% of polyolefin selected from homopolymers and copolymers of propylene and homopolymers and copolymers of ethylene having short chain branching no less than 10 branches per 1000 carbon atoms to form a web,

(b) passing the web at a temperature above its softening point through the nip of counterrotating rollers, one of said rollers being a mirror finish chill roll and the other roller being a resilient roller having a highly glossy rubber surface, and

(c) cooling the blend to produce a film having a haze value below 30%.

A particularly preferred embodiment of the above-mentioned process is that wherein

(i) the blend comprises 20 to 50 wt% of elastomer and 50 to 80 wt% of a polyolefin comprising crystalline polypropylene and LLDPE, or blends of these;

(ii) the resilient roller has a high gloss silicone rubber surface for imparting a gloss (60°) of at least 60 to the web surface contacted thereby;

(iii) the chill roll has a polished metal surface for imparting a gloss (60°) of at least 50 to the web surface contacted thereby; and

(iv) the resulting film has a haze less than 15% and a thickness no greater than $200 \times 10^{-6}$ m (200 microns).

Preferably the process is carried out at a film line speed of at least 10 metres per minute.

In general terms the process of the invention leads to a high clarity elastomer/polyolefin blend film manufactured by (a) extruding a molten web of the blend, (b) passing the molten web at a temperature above its melting or softening point through the nip of a mirror finish chill roll and a resilient roll having a highly glossy rubber surface, and (c) cooling the web after the nip to form a film having a haze less than 30% and prefeably less than 15%. The thickness of the film is preferably between $25 \times 10^{-6}$ and $250 \times 10^{-6}$ m (25 and 250 microns), and more preferably between $50 \times 10^{-6}$ and $200 \times 10^{-6}$ m (50 and 200 microns).

The polished rubber roller imparts a high gloss to the surface of the film which it contacts. The film gloss should ideally be at least 40, preferably at least 60, and most preferably at least 80, all at 60°. The gloss of the film in contact with the metal surface preferably is greater than 50 and most preferably greater than 80, also at 60°.

The elastomer component may include EPR, EPDM elastomers, polyisobutylene, butyl rubber, halogenated butyl rubber, and blends of these. The polyolefin component may include polypropylene, copolymers of propylene, homopolymers and copolymers of ethylene or blends thereof. A preferred polyolefin blend is a blend of polypropylene and low density polyethylene, particularly linear low density polyethylene. The ethylene polymers should have short chain branching from the molecule backbone of at least 10 branches (preferably 10—30 branches) per 1000 carbon atoms. For high pressure, low density polyethylene (LDPE), short chain branch lengths are $C_1$ to $C_4$ chains; for linear low density polyethylene (LLDPE), the short chain branches are $C_2$, $C_4$, or $C_6$ branches; and for high density polyethylene (HDPE), the short chain branches are $C_2$ or $C_4$ branches. Ethylene polymers such as HDPE of low number of short chain branches (less than 10) tend to result in high internal haze.

The film produced by the process of the present invention possesses properties ideal for medical bag applications and for other uses such as in thermoforming. These properties include a haze value of less than 15%, MD tear strength (Elmendorf) of greater than 4 g per $10^{-6}$ m of film thickness (4 g/micron), high impact resistance, and autoclavability (at 110—125°C).

The process of the present invention may be carried out by utilizing conventional extruders and slotted dies used in the manufacture of films. The counterrotating rollers through which the web is passed may consist of a chrome plated chill roll and a resilient roller having a glossy rubber surface. The mirror finish chill roll may be conventional, ranging from 23 to 103 cm in diameter and from 50 to 205 cm wide provided with internal cooling for maintaining the desired temperature on the surface thereof.

The resilient roller may be of the type described in U.S. Patent 4,368,240. The roller may include a metal core provided with an intermediate layer of resilient material such as 60 to 80 Shore A durometer rubber and finally by a skin layer of glossy rubber such as silicone rubber. The skin layer and intermediate layer in combination impart a Shore A hardness value in the range of 65 to 95. The skin thickness of the inner layer and skin layer will be dictated by practical considerations for manufacturing the film and economics. Thicknesses that have worked particularly well in processing elastomeric blends of the present invention are a skin layer thickness of $250 \times 10^{-6}$ m (250 microns) and an inner layer thickness of $6250 \times 10^{-6}$ m (6250 microns).

Suitable silicones for coating the roller include silicone resins sold by General Electric under the trade designation RTU 670 and sold by Dow Corning Corporation under the trade designation Sylastic and Sylgard. These resins can be used in the manufacture of a rubber roll having a high gloss and durable surface as described in U.S. Patent 4,368,240. Moreover, silicone rubber rolls of this type may be purchased from Nauta Roll Corporation of Kensington, Conn.

An air knife may be used to assist in cooling the web between the die and the nip of the counterrotating rollers. The cooling effects aid in eliminating draw resonance in this gauge film and also in preventing the web from sticking to the rubber roll.

As indicated above, the elastomer/polyolefin film usable in the process of the present invention comprises two main components: an elastomer and a polyolefin. The concentration and variations of each component may be as follows:

| Component | Types | Concentration (wt.%) | | |
| | | General | Preferred | Most preferred |
| --- | --- | --- | --- | --- |
| Elastomer (olefinic) | Blends<br>EPM Elastomer<br>EPDM Elastomer<br>Polyisobutylene<br>Butyl Rubber<br>Halogenated Butyl Rubber | 10—85 | 20—70 | 20—50 |
| Polyolefin | Propylene Polymers<br>Ethylene Polymers<br>Blends | 90—15 | 80—30 | 50—80 |

Elastomer component

The olefinic elastomer component of the composition may comprise an ethylene copolymer elastomer, such as a copolymer of ethylene with higher alpha-olefin. Preferred ethylene elastomer polymers include EPR (ASTM D-1418-72a designation of EPM for an ethylene-propylene elastomer copolymer), or EPDM (ASTM D-1418-72a designation for an ethylene-propylene diene elastomer terpolymer. Also usable are polyisobutylene rubbers, butyl rubbers and halogenated butyl rubbers.

Preferred ethylene elastomer copolymers for use herein comprise from 30 to 90 weight percent ethylene, more preferably from 35 to 80 weight percent ethylene, and most preferably from 50 to 80 weight percent ethylene. In some cases an oil extended elastomer can be employed in the compositions of this invention.

EPDM is a terpolymer of ethylene, a higher alpha-olefin such as propylene, and a nonconjugated diene. In such elastomers the nonconjugated diolefin may be straight chain, branched chain or cyclic hydrocarbon diolefins having from 6 to 15 carbon atoms.

3

Of the nonconjugated dienes typically used to prepare these copolymers, preferred are dicyclopentadiene, 1,4-hexadiene, 5-methylene-2-norbornene and 5 - ethylidene - 2 - norbornene.

The olefinic elastomer useful in this invention can also be a polyisobutylene, a copolymer of isobutylene and isoprene (generally known as butyl rubber) or a halogenated copolymer of isobutylene and isoprene (generally known as halogenated butyl rubber, such as chlorinated, brominated and chlorobrominated butyl rubber). Butyl rubber is a vulcanizable rubber copolymer containing from 85 to 99.5 percent combined isoolefin having from 4 to 8 carbon atoms and from 0.5 to 15 percent combined conjugated diolefin having from 4 to 8 carbon atoms. Such copolymers and their preparation are well known, and generally the isoolefin is a compound such as isobutylene and the diolefin is a compound such as butadiene or isoprene. Halogenated butyl rubbers are also well known; chlorinated and brominated butyl rubber generally contain at least 0.5 weight percent combined halogen and up to 1 atom of halogen per double bond in the copolymer; chlorobrominated butyl rubber generally contains from 1.0 to 3.0 weight percent bromine and from 0.05 to 0.5 weight percent chlorine.

Polyolefin component

The preferred polyolefins include polypropylene, polyethylene, copolymers of propylene and ethylene, and blends of these.

The propylene homopolymer should be highly crystalline isotactic or syndiotactic. Propylene copolymers, referred to as propylene reactor copolymers, either random or block copolymers, containing minor amounts of alpha-olefin comonomer of 2—16 carbon atoms may also be used.

Ethylene homopolymers may include high pressure branched low density polyethylene (LDPE).

The ethylene copolymers include those of ethylene and alpha olefins having 3 to 16 carbon atoms such as propylene or 1-butene (LLDPE). Also included are copolymers of ethylene with unsaturated esters of a lower carboxylic acid or with an unsaturated carboxylic acid. The ethylene copolymers to be employed generally contain from 50 to 99 weight percent ethylene, most preferably from 60 to 95 weight percent ethylene. EVA containing from 5 to 40 weight percent vinyl acetate and EAA containing 5—40 weight percent of acrylic acid are particularly preferred.

A preferred melt index (ASTM D-1238, Condition L) for propylene components is from 0.5 to 20, more preferably from 2 to 10.

A preferred melt index (ASTM D-1238, Condition E), for polyethylene components is from 0.5 to 20, more preferably from 1 to 10.

The preferred ethylene polymer is linear low density polyethylene (LLDPE) manufactured by low pressure processes (Ziegler catalysts) and employing from 3 to 14 wt.% of butene-1, pentene-1, hexene-1, 4-methyl-pentene-1, heptene-1, and octene-1 as LLDPE has a density ranging from 0.915 to 0.935 and is substantially free of long chain branching.

The preferred polyolefin blends include PP/LLDPE blends ranging in a weight ratio of 1:1 to 4:1.

Other additives: The composition may also include an extender hydrocarbon oil such as that disclosed in U.S. Patent 4,303,571 which functions as a processing aid. Oils sold under the trademarks "Flexon" and "Sunpar" are suitable processing aids for purposes of the present invention. The composition may also include fillers such as calcium carbonate and other conventional additives, such as processing aids, and stabilizers.

Preparation of compositions usable in this invention can be achieved in several different ways. The various components may be brought into intimate contact by, for example, dry blending these materials and then passing the overall composition through a compounding extruder. Alternatively, the components may be fed directly to a mixing device such as a compounding extruder, high shear continuous mixer, two roll mill or an internal mixer such as a Banbury mixer. The optional ingredients previously described can be added to the composition during this mixing operation. It is also possible to achieve melt mixing in an extruder section of an extrusion coating apparatus. Overall, the objective is to obtain a uniform dispersion of all ingredients and this is readily achieved by inducing sufficient shear and heat to cause the plastics component(s) to melt. However, time and temperature of mixing should be controlled as is normally done by one skilled in the art so as to avoid molecular weight degradation.

In operation, the elastomer/polyolefin blend is extruded from a slotted die to form a molten web which is passed through the nip of the counterrotating chill roll and resilient roll. An air knife may be used on either or both sides of the web to assist in the cooling action if the drawdown is sufficient to cause draw resonance. The web enters the nip at a temperature above the melting point of the blend. The resilient roller presses the web into intimate contact with the chill roll causing the web to cool and solidify. The web is carried around a circumferential portion of the chill roll and withdrawn and formed into a roll in the conventional manner.

The following resin blends were prepared by mixing the components in the proportion indicated and extruded to form films thereof by processing described below:

4

| Film blend | Elastomer (Wt.%) | Polyolefin (wt.%) | | |
|---|---|---|---|---|
| | | LLDPE | PP | HDPE |
| A | 40[1] | | 60[3] | |
| B | 40[5] | | 60[3] | |
| C | 25[6] | 14[7] | 61[3] | |
| D | 30[9] | | 70[8] | |
| E | 30[2] | | | 70[4] |
| F | 30[5] | | | 70[4] |
| G | 30[9] | | 70[8] | |

[1] Vistanex L-100 (PIB) of Exxon Chemical Company
[2] Vistanex L-120 (PIB) of Exxon Chemical Company
[3] PP[4 Melt Flow Rate (MFR)]
[4] HDPE [0.3 Melt Index (MI)]
[5] Butyl 065 (copolymer isobutylene and isoprene) of Exxon Chemical Company
[6] Vistalon 719 (EPR) of Exxon Chemical Company
[7] LLDPE (1 MI)
[8] PP (PPRC 4MFR)
[9] Vistalon 1721 (EPDM) of Exxon Chemical Company

Test procedures
Properties of various film samples were measured using the following test procedures:

| Relative haze | Not an ASTM test* |
|---|---|
| Tensile | D882-79 |
| % Elongation | D882-79 |
| Tear | D1922 |
| Total energy | D1709 |
| Secant Modulus | D882-79 |
| % Haze | D1003-61 |
| Gloss | D2457-70 |

* Total haze was broken down into the internal and external contributions or sources. A 40% haze may be composed of 30% external and 10% internal haze. Relative haze would then be reported as 75% external, 25% internal.

Haze
It has been surprisingly discovered that haze in elastomer/polyolefin blends is predominantly a surface phenomenon. It had previously been believed that the clarity problem with these blends was due to the extent or degree of rubber particle dispersion in the blend. However, the following experiments demonstrated that the problem is due primarily to the surface condition of the film.
Haze measurements were taken in air on films that were sandwiched between microscope-quality glass plates. The same films were then coated on both sides with droplets of oil having a refractive index of 1.492. Assuming surface scattering effects have been minimized, i.e., the R.I. (refractive index) of the oil closely matches that of the film and the glass surfaces are perfectly flat, any residual haze after the oil is applied is predominantly internal to the film.

TABLE I

| Film blend | A | B | C | D | E | F |
|---|---|---|---|---|---|---|
| Thickness in $10^{-6}$ m (microns) | 100 | 50 | 150 | 150 | 50 | 100 |
| Relative haze External | 82 | 90 | 93 | 95 | 9 | 55 |
| Internal | 18 | 10 | 7 | 5 | 91 | 45 |

The data in Table I reveals that for elastomer/HDPE (0.3 MI) blends (those used commercially in medical overwrap applications) the haze is predominantly internal and crystallite related. However, in the elastomer biblends and triblends of Films A, B, C, and D, based on polyolefins other than HDPE, the haze is primarily a function of film surface roughness.

Effects of polishing with silicone rubber roll surface
In order to demonstrate the effects of polishing with a high gloss rubber roll/mirror finish chrome chill roll versus a 3 roll metal stack, the following experiments were conducted.
The resin of film blend C was extruded from a conventional slotted die using a conventional extruder and was either cast or processed through the nip of the rubber roll arrangement.

Rubber roll arrangement
Chromed chill roll maintained at 21°—38°C.
Rubber roll—silicone coated (purchased from Nauta Roll Corporation, Inc.)
The physical properties of the film samples were measured and are shown in Table II.

TABLE II

| Film thickness in $10^{-6}$ (microns) | | Cast (Conventional) | | | Polished (This invention) | | |
|---|---|---|---|---|---|---|---|
| | | 100 | 200 | 300 | 100 | 200 | 300 |
| Tensile, | MD | 46.9 | 33.8 | 28.7 | 49.7 | 42.8 | 31.0 |
| (MPa) | TD | 36.6 | 26.2 | 23.4 | 42.1 | 28.3 | 19.3 |
| % Elongation | MD | 650 | 700 | 700 | 750 | 800 | 700 |
| | TD | 800 | 650 | 650 | 900 | 700 | 650 |
| Tear, (g per $10^{-6}$ m | MD | 3 | 4 | 4.4 | 8.8 | 4 | 4.6 |
| (micron) of film thickness) | TD | 12 | 4.4 | 4 | 17.6 | 4.6 | 4.8 |
| Total energy (cm. kg. per $10^{-6}$ m (micron) of film thickness) | | .67 | .83 | .88 | .92 | .83 | .83 |
| Stiffness, | MD | 614 | 690 | 648 | 476 | 641 | 648 |
| (MPa) | TD | 545 | 559 | 586 | 345 | 545 | 593 |

The data in Table II reveals that processing by the present invention significantly improves the physical properties of the film for film thicknesses $100 \times 10^{-6}$ and $200 \times 10^{-6}$ m (100 and 200 microns). Heat transfer limitations encountered in the thicker films somewhat limited the effects of the present invention on the properties of those films. The thin film ($100 \times 10^{-6}$ m, 100 microns) had surprisingly high MD tear.
Additional tests have been conducted to compare the effects of procesing on film clarity. The resin samples below were processed by the present invention or by conventional 3 roll stack of metal (chrome) rolls such as that used in metal calendering. Table III presents the comparisons:

# EP 0 165 075 B1

## TABLE III

| Film | Film thickness in $10^{-6}$ m (microns) | % Haze | | Gloss (60°) |
| | | Metal-to-Metal 3 roll stack | Glossy silicone/ metal comb. | |
|---|---|---|---|---|
| C | 100 | Not possible** | 7 | 96/97* |
| | 200 | 15 | 10 | 66/82 |
| | 300 | 20 | 14 | 60/62 |
| D | 100 | Not possible | 4 | |
| | 200 | 8 | 4 | |
| | 300 | 10 | 6 | |

\* Si rubber side/chromed chill roll side
\*\* $100 \times 10^{-6}$ m (100 microns) film of uniform clarity could not be processed on the three roll stack

The above gloss data was based on samples produced using mirror finish silicone rubber coated roller having a Shore A hardness of 78. Additional tests using a dull silicone rubber coating (Shore A hardness 64) resulted in gloss (60°) ranging from 7/57 to 18/80 for the blend C films.

The samples produced on the three roll stack showed evidence of significant internal stress when viewed under crossed polarized sheets. There was no evidence of internal stress with films processed with this invention.

The glossy silicone rubber coated roll improved the film clarity for each thickness. It is significant to note that these improved results were obtained at line speeds in excess of 10 metres/min (mpm) (actual 11.3—13.3 mpm) as compared to 3.3—5.0 mpm for the 3 roll stack arrangement.

In summary, the above experiments demonstrate that the films prepared according to the present invention possess clarity, are ideally suited for medical packaging applications and other applications where these properties are important.

Elastomeric films which may be produced by the process of the invention and which represent another aspect of the invention comprise 10 to 85 wt% of an elastomer and 90 to 15 wt% of polyolefin selected from homopolymers and copolymers of propylene and homopolymers and copolymers of ethylene having short chain branching no less than 10 branches per 1000 carbon atoms, and have the following properties:
(a) haze of less than 30%,
(b) MD tear greater than 4 g per $10^{-6}$ m of film thickness (4 g/micron), and
(c) gloss (60°) greater than 40.
A particularly preferred such film is that wherein
(a) the haze is less than 15%,
(b) the MD tear is greater than 4 g per $10^{-6}$ m of film thickness (4 g/micron), and
(c) the gloss (60°) is greater than 60,
and which has the following additional properties:
(d) a thickness of $125 \times 10^{-6}$ m (125 micron) or less, and
(e) a MD tensile greater than 27 MPa.

## Claims

1. A process for the manufacture of elastomeric film which comprises
(a) extruding a molten blend of 10 to 85 wt.% of an elastomer and 90 to 15 wt.% of polyolefin selected from homopolymers and copolymers of propylene and homopolymers and copolymers of ethylene having short chain branching no less than 10 branches per 1000 carbon atoms to form a web,
(b) passing the web at a temperature above its softening point through the nip of counterrotating rollers, one of said rollers being a mirror finish chill roll and the other roller being a resilient roller having a highly glossy rubber surface, and
(c) cooling the blend to produce a film having a haze value below 30%.

2. The process as defined in Claim 1 wherein the highly glossy rubber surface imparts a gloss (at 60°) of at least 40 to one film surface.

3. The process as defined in Claim 1 or 2 wherein the elastomer comprises no more than 70 wt.% of the blend.

7

4. The process as defined in Claim 1, 2 or 3 wherein the glossy rubber surface is silicone rubber having a Shore A hardness of from 65 to 95.

5. The process as defined in any one of Claims 1—4 wherein the blend comprises from 20 to 70 wt.% of an elastomer selected from EPR and EPDM and the polyolefin comprises from 80 to 30 wt.% of a homopolymer or copolymer of propylene or ethylene or blends thereof.

6. The process as defined in Claim 5 wherein the polyolefin is a blend of crystalline polypropylene and linear low density polyethylene (LLDPE).

7. The process as defined in Claim 6 wherein polypropylene comprises the major weight portion of the polyolefin blend.

8. The process as defined in any one of Claims 1—7 and further comprising air cooling of the melt in advance of the roller nip.

9. The process as defined in Claim 1 wherein

(i) the blend comprises 20 to 50 wt.% of elastomer and 50 to 80 wt.% of a polyolefin comprising crystalline polypropylene and LLDPE, or blends of these;

(ii) the resilient roller has a high gloss silicone rubber surface for imparting a gloss (60°) of at least 60 to the web surface contacted thereby;

(iii) the chill roll has a polished metal surface for imparting a gloss (60°) of at least 50 to the web surface contacted thereby; and

(iv) the resulting film has a haze less than 15% and a thickness no greater than $200 \times 10^{-6}$ m (200 microns).

10. The process of Claim 9 which is carried out at a film line speed of at least 10 metres per minute.

11. An elastomeric film comprising 10 to 85 wt.% of an elastomer and 90 to 15 wt.% of polyolefin selected from homopolymers and copolymers of propylene and homopolymers and copolymers of ethylene having short chain branching no less than 10 branches per 1000 carbon atoms and having the following properties:

(a) haze of less than 30%,

(b) MD tear greater than 4 g per $10^{-6}$ m of film thickness (4 g/micron), and

(c) gloss (60°) greater than 40.

12. The film according to Claim 11 wherein

(a) the haze is less than 15%,

(b) the MD tear is greater than 4 g per $10^{-6}$ m of film thickness (4 g/micron), and

(c) the gloss (60°) is greater than 60,

and which has the following additional properties:

(d) a thickness of $125 \times 10^{-6}$ m (125 micron) or less, and

(e) a MD tensile greater than 27 MPa.

13. The use of film according to Claim 11 or 12, or film manufactured by the process according to any one of Claims 1—10, in medical packaging applications.

14. Medical packaging or packages which comprises film according to Claim 11 or 12 or film manufactured by the process according to any one of Claims 1—10.

## Patentansprüche

1. Verfahren zur Herstellung einer elastomeren Folie, bei dem

(a) eine geschmolzene Mischung von 10 bis 85 Gew.% eines Elastomers und 90 bis 15 Gew.% Polyolefin ausgewählt aus Homopolymeren und Copolymeren von Propylen und Homopolymeren und Copolymeren von Ethylen mit einer kurzkettigen Verzweigung von nicht weniger als 10 Verzweigungen je 1000 Kohlenstoffatomen zur Bildung einer Bahn extrudiert wird,

(b) die Bahn bei einer Temperatur über ihrem Erweichungspunkt durch den Spalt von gegenläufigen Walzen geleitet wird, wobei eine der Walzen eine Hochglanzkühlwalze und die andere Walze eine elastische Walze mit einer hochglänzenden Gummioberfläche ist, und

(c) die Mischung zur Herstellung einer Folie mit einem Trübungswert unterhalb 30% gekühlt wird.

2. Verfahren nach Anspruch 1, bei dem die hochglänzende Gummioberfläche einer Folienoberfläche einen Glanz (bei 60°) von mindestens 40 verleiht.

3. Verfahren nach Anspruch 1 oder 2, bei dem das Elastomer nicht mehr als 70 Gew.% der Mischung ausmacht.

4. Verfahren nach Anspruch 1, 2 oder 3, bei dem die glänzende Gummioberfläche Silikonkautschuk mit einer Shore A-Härte von 65 bis 95 ist.

5. Verfahren nach einem der Ansprüche 1 bis 4, bei dem die Mischung 20 bis 70 Gew.% eines Elastomers ausgewählt aus EPR und EPDM ist und das Polyolefin 80 bis 30 Gew.% eines Homopolymers oder Copolymers von Propylen oder Ethylen oder Mischungen davon ausmacht.

6. Verfahren nach Anspruch 5, bei dem das Polyolefin eine Mischung aus kristallinem Polypropylen und linearem Polyethylen niederer Dichte (LLDPE) ist.

7. Verfahren nach Anspruch 6, bei dem Polypropylen einen überwiegenden Gewichtsanteil der Polyolefinmischung ausmacht.

8. Verfahren nach einem der Ansprüche 1 bis 7, das eine Luftkühlung der Schmelze vor dem Walzenspalt umfaßt.

9. Verfahren nach Anspruch 1, bei dem

(i) die Mischung 20 bis 50 Gew.% Elastomer und 50 bis 80 Gew.% eines Polyolefins, das kristallines Polypropylen und LLDPE oder Mischungen davon umfaßt, umfaßt,

(ii) die elastische Walze eine hochglänzende Silikonkautschukoberfläche aufweist, um den damit in Kontakt kommenden Bahnoberfläche einen Glanz (60°) von mindestens 60 zu verleihen,

(iii) die Kühlwalze eine polierte Metalloberfläche besitzt, um der damit in Berührung kommenden Bahnoberfläche einen Glanz (60°) von mindestens 50 zu verleihen, und

(iv) die resultierende Folie eine Trübung von weniger als 15% und eine Dicke von nicht mehr als $200 \times 10^{-6}$ m (200 µm) besitzt.

10. Verfahren nach Anspruch 9, das mit einer Folienproduktionsgeschwindigkeit von mindestens 10 m/min durchgeführt wird.

11. Elastomere Folie, die 10 bis 85 Gew.% eines Elastomers und 90 bis 15 Gew.% Polyolefin ausgewählt aus Homopolymeren und Copolymeren von Propylen und Homopolymeren und Copolymeren von Ethylen mit Kurzkettenverzweigung umfaßt und folgende Eigenschaften aufweist:

(a) eine Trübung von weniger als 30%,

(b) eine Reißfestigkeit in Maschinenrichtung von mehr als 4 g/$10^{-6}$ m Filmdicke (4 g/µm) und

(c) einen Glanz (60°) von mehr als 40.

12. Folie nach Anspruch 11, bei der

(a) die Trübung weniger als 15% beträgt,

(b) die Reißfestigkeit in Maschinenrichtung größer als 4 g/$10^{-6}$ m Filmdicke (4 g/µm) ist, und

(c) der Glanz (60°) größer als 60 ist,

und die die folgenden zusätzlichen Eigenschaften aufweist:

(d) eine Dicke von $125 \times 10^{-6}$ m (125 µm) oder weniger und

(e) eine Zugfestigkeit in Maschinenrichtung von mehr als 27 MPa.

13. Verwendung der Folie nach Anspruch 11 oder 12 oder einer nach dem Verfahren gemäß einem der Ansprüche 1 bis 10 hergestellten Folie bei Verpackungen auf medizinischem Gebiet.

14. Verpackung oder Packungen auf medizinischem Gebiet, die eine Folie gemäß Anspruch 11 oder 12 oder eine Folie hergestellt nach dem Verfahren gemäß einem der Ansprüche 1 bis 10 umfassen.


## Revendications

1. Procédé de production d'un film élastomérique, qui consiste:

(a) à extruder un mélange en fusion de 10 à 85% en poids d'un élastomère et de 90 à 15% en poids d'une polyoléfine choisie entre des homopolymères et des copolymères de propylène et des homopolymères et des copolymères d'éthylène ayant une ramification de chaînes courtes ne comportant pas moins de dix branches latérales pour 1000 atomes de carbone de manière à former une bande,

(b) à faire passer la bande à une température supérieure à son point de ramollissement dans l'intervalle entre les rouleaux tournant en sens contraires, dont l'un est un rouleau de refroidissement à fini spéculaire et l'autre est un rouleau élastique portant un revêtement de caoutchouc très brillant, et

(c) à refroidir le mélange pour produire un film ayant une valeur de voile en dessous de 30%.

2. Procédé selon la revendication 1, dans lequel le revêtement de coutchouc très brillant communique un brillant (sous 60°) d'au moins 40 à une des surfaces du film.

3. Procédé selon la revendication 1 ou 2, dans lequel l'élastomère ne constitue pas plus de 70% en poids du mélange.

4. Procédé suivant la revendication 1, 2 ou 3, dans lequel le revêtement de caoutchouc brillant est un caoutchouc de silicone ayant une dureté Shore A de 65 à 95.

5. Procédé suivant l'une quelconque des revendications 1 à 4, dans lequel le mélange comprend 20 à 70% en poids d'un élastomère choisi entre les élastomères EPR et EPDM et la polyoléfine comprend 80 à 30% d'un homopolymère ou d'un copolymère de propylène ou d'éthylène ou leurs mélanges.

6. Procédé suivant la revendication 5, dans lequel la polyoléfine est un mélange de polypropylène cristallin et d'un polyéthylène linéaire basse densité (PELBD).

7. Procédé suivant la revendication 6, dans lequel le polypropylène constitue la proportion majeure en poids du mélange polyoléfinique.

8. Procédé suivant l'une quelconque des revendications 1 à 7, qui comprend en outre un refroidissement par l'air de la masse fondue en avant de l'espace entre rouleaux.

9. Procédé suivant la revendication 1, dans lequel

(i) le mélange comprend 20 à 50% en poids d'élastomère et 50 à 80% en poids d'une polyoléfine comprenant du polypropylène cristallin et du PELBD, ou des mélanges de ces composants;

(ii) le rouleau élastique porte un revêtement de caoutchouc de silicone très brillant destiné à conférer un brillant (sous 60°) d'au moins 60 à la surface de la bande venant à son contact;

(iii) le rouleau refroidisseur présente une surface métallique polie conférant un brillant (sous 60°) d'au moins 50 à la surface de la bande venant en contact avec lui; et

(iv) le film résultant a un voile de moins de 15% et une épaisseur ne dépassant pas $200 \times 10^{-6}$ m (200 µm).

10. Procédé suivant la revendication 9, qui est mis en oeuvre à une vitesse linéaire du film d'au moins 10 mètres par minutes.

11. Film élastomèrique comprenant 10 à 85% en poids d'un élastomère et 90 à 15% en poids d'une polyoléfine choisie entre des homopolymères et des copolymères de propylène et des homopolymères et des copolymères d'éthylène ramifiés par des chaînes courtes et ayant les propriétés suivantes:

(a) voile inférieur à 30%

(b) déchirure dans la direction machine supérieure à 4 g par $10^{-6}$ m d'épaisseur de film (4 g/µm), et

(c) brillant (sous 60°) supérieur à 40

12. Film suivant la revendication 11, dans lequel

(a) le voile est inférieur à 15%

(b) la déchirure dans la direction machine est supérieure à 4 g par $10^{-6}$ m d'épaisseur de film (4 g/µm) et

(c) le brillant (sous 60°) est supérieur à 60, et qui en outre possède les propriétés suivantes:

(d) épaisseur égale ou inférieure à $125 \times 10^{-6}$ m (125 µm)

(e) résistance à la traction dans la direction machine supérieure à 27 MPa.

13. Utilisation d'un film suivant la revendication 11 ou 12, ou d'un film fabriqué par le procédé suivant l'une quelconque des revendications 1 à 10, dans des applications d'emballage dans le domaine médical.

14. Emballage ou conditionnement médical, qui comprend un film suivant la revendication 11 ou 12, ou un film fabriqué par le procédé suivant l'une quelconque des revendications 1 à 10.